# FASCICULE DE BREVET EUROPEEN

(11) **EP 1 472 807 B1**
(45) Date de publication et mention de la délivrance du brevet: **07.02.2007**
(21) Numéro de dépôt: 03712287.6
(22) Date de dépôt: 31.01.2003
(51) Int. Cl.: H04B 7/06, H04L 27/26, H04Q 7/38

(54) **STATION DE BASE EN DIVERSITE POUR SYSTEME DE TELECOMMUNICATION**
BASISSTATION MIT DIVERSITÄT FÜR EIN TELEKOMMUNIKATIONSSYSTEM
BASE STATION FOR A TELECOMMUNICATION SYSTEM

(30) Priorité: 31.01.2002 FR 0201143
(43) Date de publication de la demande: 03.11.2004
(73) Titulaire: Evolium S.A.S., 75008 Paris (FR)
(72) Inventeur: DARTOIS, lUC, 78955 Carrieres Sous Poissy (FR)
(74) Mandataire: El Manouni, Josiane
(86) Numéro de dépôt international: PCT/FR2003/000291
(87) Numéro de publication internationale: WO 2003/065615

(56) Documents cités:
- EP-A- 0 929 161
- US-A- 5 722 053
- US-A- 6 005 876
- SAKAKURA S ET AL: "Pre-diversity using coding, multi-carriers and multi-antennas" 1995 FOURTH IEEE INTERNATIONAL CONFERENCE ON UNIVERSAL PERSONAL COMMUNICATIONS RECORD. GATEWAY TO THE 21ST. CENTURY. TOKYO, NOV. 6 - 10, 1995, IEEE INTERNATIONAL CONFERENCE ON UNIVERSAL PERSONAL COMMUNICATIONS, NEW YORK, IEEE, US, vol. CONF. 4, 6 novembre 1995 (1995-11-06), pages 605-609, XP010160611 ISBN: 0-7803-2955-4

## Description

L'invention est relative à une station de base pour un système de télécommunication, notamment un système fonctionnant selon la norme UMTS.

On sait que dans un système de télécommunication dans lequel les terminaux sont constitués par des mobiles la zone sur laquelle s'étend le système est divisée en cellules et dans chaque cellule on prévoit une station de base. Les signaux émis et reçus par les mobiles transitent par la station de base affectée à la cellule dans laquelle se trouve ce mobile.

Dans un tel système de télécommunication, les stations de base constituent en général les éléments les plus onéreux et, dans une station de base le composant le plus coûteux est l'amplificateur de puissance dont le prix est d'autant plus élevé qu'il doit émettre sur une bande de fréquences plus large. En effet, plus la bande de fréquences à émettre est large, plus il est difficile d'assurer une linéarité sur toute la bande avec, en même temps, un rendement maximum. Ce problème est particulièrement aigu pour la norme UMTS qui fait appel à des codes étalés en fréquences sur une large bande, c'est-à-dire à la transmission WCDMA (Wide Band Code Division Multiple Access) où chaque porteuse modulée a une largeur de 5 mégahertz et l'ensemble des bandes attribuables s'étale sur 60 mégahertz soit douze porteuses.

Par ailleurs, le prix d'une station de base peut encore être sensiblement augmenté quand, comme c'est également le cas pour la norme UMTS, il est nécessaire de prévoir une diversité spatiale d'émission. On rappelle ici qu'une émission par diversité spatiale consiste à émettre deux fois la même information sur la même fréquence porteuse, un ou plusieurs paramètres différents étant prévus pour différencier ces deux émissions et éviter des effets indésirables de combinaison destructive des signaux radio. Les deux informations peuvent se distinguer, par exemple, par un décalage dans le temps, par une orthogonalité entre les signaux émis ou encore par des contrôles différents de l'amplitude et de la phase.

Un exemple de document décrivant un système utilisant la technique de diversité spatiale d'émission est le document US-A-6 005 876.

Cette diversité spatiale d'émission diminue la probabilité d'erreur de transmission, notamment quand les conditions de propagation ne sont pas optimales. En particulier la diversité d'émission est utile quand la distance entre la station de base et le mobile augmente, c'est-à-dire quand, en général, le mobile se rapproche de la limite de la cellule et/ou lorsque le rapport signal à bruit ou le rapport signal à interférence nécessaire à la bonne réception diminue, par exemple pour des transmissions de données à haut débit.

Pour permettre une émission en diversité spatiale, on prévoit, dans chaque station de base, deux chaînes d'émission avec, pour chaque chaîne, un amplificateur à large bande et une antenne. Chacune des deux chaînes fonctionne sur la totalité de la bande d'émission attribuée à l'opérateur (ou aux opérateurs) utilisant cette chaîne,
par exemple trois ou quatre fréquences adjacentes de largeur 5 mégahertz chacune.

L'émission à diversité spatiale oblige donc à prévoir deux chaînes d'émission.

L'invention, qui part de la constatation que la diversité spatiale d'émission n'est pas nécessaire en permanence et qu'elle n'est pas non plus nécessaire pour tous les mobiles, permet d'optimiser l'utilisation des ressources d'émission.

La station de base selon l'invention comporte, de façon connue, au moins deux chaînes d'émission dont chacune est susceptible d'émettre sur plusieurs fréquences porteuses et elle est caractérisée en ce que les chaînes d'émission présentent au moins une fréquence commune pour permettre l'émission par diversité spatiale sur cette fréquence commune, et en ce qu'au moins l'une des chaînes présente au moins une autre fréquence, distincte de la fréquence commune, pour des émissions sans diversité spatiale.

De préférence les deux chaînes d'émission émettent le même nombre de fréquences à émettre simultanément et ont la même puissance maximale d'émission et chacune est configurable pour émettre sur des fréquences qui peuvent être décalées par rapport aux fréquences de l'autre chaîne.

On peut montrer que si l'on prévoit deux chaînes d'émission dont chacune peut émettre sur deux fréquences porteuses adjacentes dont l'une est commune aux deux chaînes, la capacité d'émission est de 10 à 20 % supérieure à la capacité obtenue avec une double chaîne d'émission comportant trois fréquences communes adjacentes. En outre, les contraintes imposées à chaque chaîne d'émission (dans l'exemple, deux fréquences et non trois) sont moins importantes avec l'invention.

La technologie des amplificateurs pour stations de base de type UMTS est telle que ces amplificateurs peuvent traiter toutes les douze porteuses UMTS, mais ne peuvent traiter de façon instantanée que deux, trois ou quatre porteuses adjacentes, correspondant à une largeur de bande de 10 à 20 mégahertz.

Ainsi l'invention ne nécessite pas de changement de technologie mais une programmation des deux (ou plus) chaînes d'émission de façon différente que dans les stations de base connues. Il suffit de décaler les fréquences d'une chaîne d'émission par rapport aux fréquences de l'autre chaîne.

L'invention s'applique aussi dans le cas où l'on prévoit au moins deux groupes de chaînes d'émission et dans chaque groupe, toutes les chaînes émettent à diversité spatiale sur au moins une fréquence qui est attribuée à ce seul groupe et on prévoit au moins une autre fréquence d'émission attribuée à l'ensemble des chaînes des deux groupes pour permettre une diversité spatiale d'émission étendue, c'est-à-dire une diversité spatiale pour l'ensemble des chaînes d'émission des deux groupes. Dans ce cas, la fréquence d'émission attribuée aux deux groupes permet une émission à diversité spatiale d'un degré plus élevé que la diversité spatiale pour les fréquences attribuées à un seul groupe.

L'invention concerne de façon générale un ensemble d'émission d'une station de base vers des terminaux dans un système de télécommunication, cet ensemble comprenant au moins deux chaînes ou groupes de chaînes d'émission susceptibles d'émettre sur plusieurs fréquences porteuses adjacentes, ces chaînes pouvant émettre en diversité spatiale de façon que l'émission d'une même information puisse être effectuée par les chaînes ou groupes de chaînes d'émission sur la (les) même(s) fréquence(s) porteuse(s). Cet ensemble est tel que les chaînes ou groupes de chaînes d'émission comportent au moins une fréquence porteuse commune destinée à l'émission en diversité spatiale et au moins l'une des chaînes ou l'un des groupes comporte au moins une fréquence de valeur différente pour l'émission sans diversité spatiale ou avec une diversité spatiale de degré moins élevé.

Selon une réalisation, chacune des chaînes, ou chacun des groupes de chaînes, d'émission comporte au moins une fréquence porteuse pour l'émission sans diversité spatiale ou avec une diversité spatiale de degré moins élevé.

De préférence, au moins une des chaînes d'émission comporte un amplificateur de puissance pouvant émettre sur une pluralité de fréquences porteuses et dont on peut choisir les fréquences actives par programmation.

Dans un mode de réalisation, l'ensemble comporte des moyens pour, en cours de communication ou en période de veille pour chacun des terminaux dans la zone couverte par la station, modifier la fréquence d'émission d'une première fréquence avec diversité spatiale vers une seconde fréquence sans diversité spatiale, ou à diversité spatiale de degré moins élevé que pour la première fréquence et réciproquement.

Dans ce cas, la commutation d'une première fréquence avec diversité spatiale vers une seconde fréquence sans diversité spatiale ou à diversité moindre, ou réciproquement, peut s'effectuer en fonction d'au moins l'un des paramètres suivants : la position estimée du terminal par rapport à la station de base, le débit de la communication de la station vers le terminal, le niveau ou la qualité de réception des signaux par le terminal, la puissance nécessaire pour joindre le terminal, la classe du terminal, et le type d'abonnement du terminal.

Dans une réalisation, l'ensemble comporte un dispositif d'attribution des ressources radio agencé pour modifier la fréquence d'émission utilisée pour chaque communication vers un terminal.

L'ensemble peut aussi comprendre deux groupes de chaînes d'émission et chaque groupe peut comporter au moins une fréquence utilisée à diversité spatiale pour uniquement ce groupe et au moins une autre fréquence utilisée à diversité spatiale pour les deux groupes.

L'invention concerne aussi l'application d'un ensemble ainsi défini à un système de télécommunication selon la norme UMTS ou CDMA 2000 ou DOCOMO.

Elle concerne également l'application d'un tel ensemble à un système de télécommunication disposant d'une fonction de réaffectation de fréquence en cours de communication et/ou en mode de veille des terminaux.

D'autres caractéristiques et avantages de l'invention apparaîtront avec la description de certains de ses modes de réalisation, celle-ci étant effectuée en se référant aux dessins ci-annexés sur lesquels :
La figure 1 est un schéma d'un système de télécommunication dans lequel une station de base émet avec diversité spatiale,
les figures 2a et 2b sont des diagrammes montrant des propriétés des chaînes d'émission d'une station de base connue,
les figures 3a et 3b sont des diagrammes analogues à ceux des figures 2a et 2b, mais pour une station de base conforme à l'invention,
les figures 4a et 4b ainsi que 5a et 5b sont des diagrammes analogues à ceux des figures 3a et 3b illustrant certaines propriétés de la station de base selon l'invention, et
les figures 6a, 6b et 6c sont des schémas montrant des variantes de l'invention.

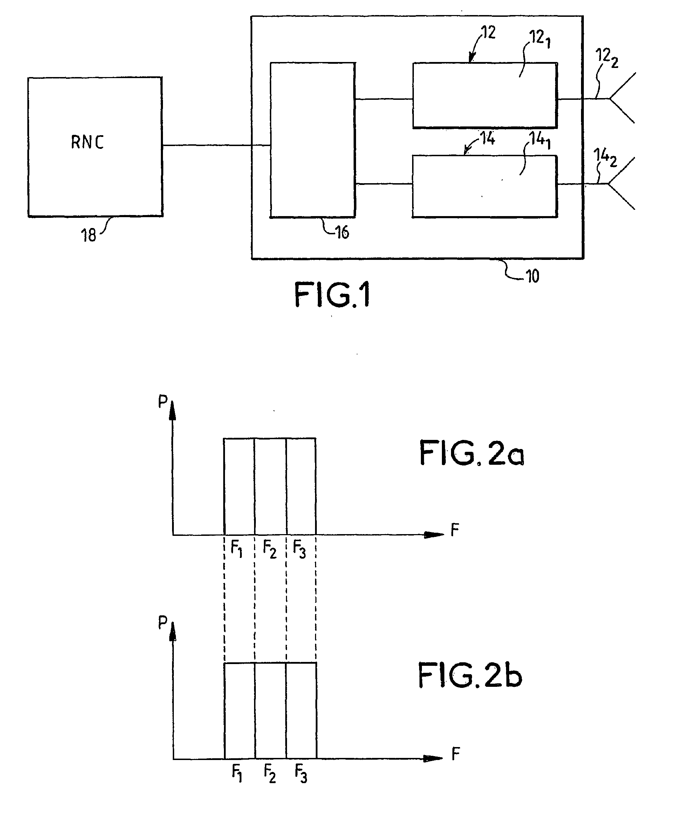

Dans un système de télécommunication de type UMTS les principaux éléments sont les stations de base, notamment la partie d'émission de ces stations de base. Ainsi on a représenté sur la figure 1 la partie d'émission 10 d'une station de base, appelée Noeud B dans la norme UMTS, qui comprend deux chaînes d'émission respectivement 12 et 14, dont chacune comprend un amplificateur multi porteuses 12₁ et 14₁ et une antenne 12₂ et 14₂. La station de base 10 comporte aussi un organe 16 pour la commande d'émission des signaux et le traitement en bande de base, cet organe 16 étant géré par un dispositif 18 de gestion des ressources radio (RNC pour « radio network controller » en langue anglaise).

Selon la technique antérieure, chaque chaîne 12 et 14 émet comme représenté sur les diagrammes des figures 2a et 2b, c'est-à-dire que les deux chaînes sont identiques et émettent selon (par exemple) trois fréquences adjacentes F₁, F₂ et F₃ et avec la même puissance. Ainsi, la station de base peut émettre en diversité sur chacune des fréquences porteuses F₁, F₂ et F₃.

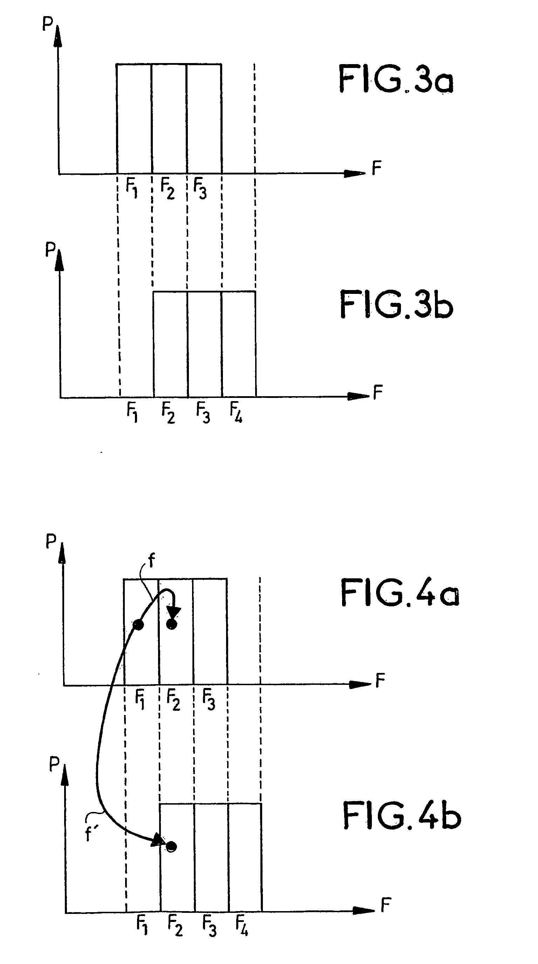

Un exemple de propriété d'une station de base conforme à l'invention est représenté par les diagrammes des figures 3a et 3b. Cette station de base est la même que celle représentée sur la figure 1, c'est-à-dire qu'elle utilise les mêmes circuits (hardware), mais est programmée de façon différente. Par exemple la chaîne d'émission 12 émet sur les mêmes fréquences que dans la station de base connue, c'est-à-dire sur les fréquences F₁, F₂ et F₃. Par contre, la chaîne d'émission 14 est programmée pour émettre sur les fréquences F₂, F₃ et F₄, la fréquence F₄ étant adjacente à la fréquence F₃ et de valeur supérieure. Dans ces conditions, la station peut émettre en diversité spatiale aux fréquences F₂ et F₃ et sans diversité spatiale aux fréquences F₁ par la chaîne 12, et à la fréquence F₄ par la chaîne 14.

Le dispositif 18 attribue les ressources radio, c'est-à-dire les fréquences, de façon nouvelle. Ainsi, comme représenté sur les figures 4a et 4b, si un mobile se trouve proche de la station de base au début d'une communication, le dispositif 18 commande la station de base de façon telle qu'elle émette sans diversité spatiale, par la fréquence F₁ de la chaîne 12. Si, ensuite, le mobile (non montré) s'éloigne de la station de base pour se rapprocher de là frontière de la cellule correspondante, le dispositif 18 modifie, au cours de la communication, la fréquence attribuée de façon à permettre une émission en diversité spatiale, c'est-à-dire l'émission sur les deux chaînes 12 et 14. Dans cet exemple la fréquence F₁ est abandonnée au profit de la fréquence F₂ émise sur les deux chaînes 12 et 14. La commutation par émission sans diversité vers une émission avec diversité est représentée par les flèches f et f' sur les figures 4a et 4b. Elle est réalisée dans le cas de la norme UMTS par la fonctionnalité dite de « Hard Handover » ou « handover interfréquentiel ».

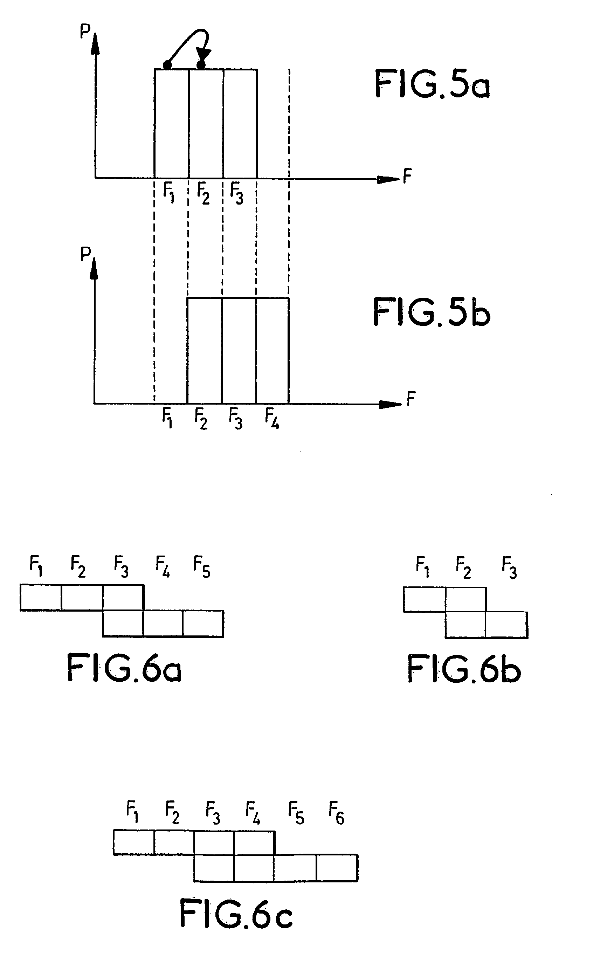

Les figures 5a et 5b illustrent le fonctionnement de la même station de base dans le cas où le mobile est prêt à communiquer. Par exemple si ce mobile se déclare dans la cellule sur la fréquence F₁ et si ce mobile se trouve, par exemple, proche de la frontière de la cellule, alors le dispositif 18 commandera la station de base pour attribuer de la diversité spatiale aux émissions de la station de base vers le mobile. Ainsi, les émissions vers ce mobile ne seront pas effectuées sur F₁, mais sur F₂ ou F₃ qui permet cette diversité spatiale d'émission.

De façon analogue il est possible de modifier, avant communication, ou en cours de communication l'attribution des fréquences de façon à commuter d'une fréquence avec diversité, vers une fréquence sans diversité spatiale. Il est surtout important de noter que le dispositif 18 peut changer dynamiquement, en temps réel, la fréquence' attribuée à l'émission vers chaque mobile indépendamment.

Dans les exemples mentionnés ci-dessus on a surtout fait allusion au besoin en diversité spatiale d'émission quand le mobile s'éloigne de la station de base. Mais la commutation entre émission en diversité et sans diversité peut dépendre d'autres critères. Par exemple quand le débit d'information vers le mobile est élevé on choisira une bande de fréquences avec diversité spatiale, et quand le débit est faible on pourra choisir une fréquence d'émission ne permettant pas la diversité spatiale. Le choix d'émission avec et sans diversité peut encore dépendre des critères tels que :
- Les critères de qualité de service négociés en début de communication, et
- les algorithmes de provisionnement et équilibrage de ressources du dispositif RNC 18 peuvent aussi, par exemple, décider d'affecter, selon la fourchette de débit demandée, tous les mobiles à haut débit sur les porteuses avec diversité et d'affecter les mobiles "standards" sur les autres porteuses sans diversité.

L'invention n'est pas limitée non plus au cas décrit ci-dessus où chaque station de base peut émettre selon trois fréquences adjacentes avec deux fréquences communes. Ainsi, comme représenté sur la figure 6a, la chaîne 12 émet selon les fréquences F₁, F₂ et F₃ tandis que la chaîne 14 émet selon les fréquences F₃, F₄ et F₅, c'est-à-dire que seule la fréquence F₃ est prévue pour l'émission en diversité spatiale, tandis que les fréquences F₁, F₂, F₄ et F₅ permettent l'émission sans diversité.

Dans l'exemple représenté sur la figure 6b, la chaîne 12 émet selon les fréquences F₁ et F₂ tandis que la chaîne 14 émet selon les fréquences F₂ et F₃. Il est à noter que, dans ce cas, le nombre de porteuses par amplificateur d'émission étant moins important, la consommation par amplificateur peut être plus faible car les contraintes de linéarisation sont moins sévères. En outre, comme indiqué ci-dessus, la capacité peut être augmentée d'environ 10 à 20 % par rapport à un système de télécommunication dans lequel on prévoit que chaque chaîne d'émission fonctionne sur trois fréquences porteuses adjacentes.

Dans l'exemple représenté sur la figure 6c, la chaîne 12 émet selon les fréquences F₁, F₂, F₃ et F₄ tandis que la chaîne 14 émet selon les fréquences F3, F4, F₅ et F₆. Une telle configuration peut être utilisée quand deux opérateurs partagent la même infrastructure, notamment les mêmes stations de base. Par exemple, le premier opérateur utilisera les fréquences F₁, F₂ et F₃ tandis que le second opérateur utilisera les fréquences F₄, F₅ et F₆.

Ainsi avec une technologie d'amplificateur à 4 porteuses et seulement 2 amplificateurs, on obtient une station servant 2 opérateurs à 3 porteuses chacun, chaque opérateur disposant de la diversité d'émission sur une de ses porteuses.

Toutefois, il est possible aussi que les opérateurs partagent leurs bandes de fréquences.

L'invention s'applique aussi dans le cas où l'on dispose de plus de deux chaînes d'émission comme c'est le cas quand on fait appel à des antennes dites "intelligentes". Dans un exemple, on prévoit huit chaînes réparties en deux groupes de quatre chaînes chacun et dans chaque groupe, les quatre chaînes utilisent une (ou plusieurs) fréquence à diversité spatiale pour ces quatre chaînes seulement et une (ou plusieurs) fréquence à diversité spatiale pour l'ensemble des huit chaînes. Autrement dit, l'invention s'applique, de façon générale, dans le cas où l'on prévoit des diversités spatiales à plusieurs degrés : un degré faible pour une diversité spatiale faisant intervenir seulement une partie des chaînes et un degré élevé pour la diversité spatiale faisant intervenir l'ensemble des chaînes.

## Revendications

1. Ensemble d'émission d'une station de base (10) vers des terminaux dans un système de télécommunication, cet ensemble comprenant au moins deux chaînes ou groupes de chaînes d'émission (12, 14) susceptibles d'émettre sur plusieurs fréquences porteuses adjacentes, ces chaînes pouvant émettre en diversité spatiale de façon que l'émission d'une même information puisse être effectuée par les chaînes ou groupes de chaînes d'émission sur la (les) même(s) fréquence(s) porteuse(s), **caractérisé en ce que** les chaînes ou groupes de chaînes d'émission comportent au moins une fréquence porteuse commune (F₂, F₃) destinée à l'émission en diversité spatiale et **en ce qu'**au moins l'une des chaînes ou l'un des groupes comporte au moins une fréquence (F₁, F₄) de valeur différente pour l'émission sans diversité spatiale ou avec une diversité spatiale de degré moins élevé.

2. Ensemble selon la revendication 1 **caractérisé en ce que** chacune des chaînes, ou chacun des groupes de chaînes, d'émission comporte au moins une fréquence porteuse pour l'émission sans diversité spatiale ou avec une diversité spatiale de degré moins élevé.

3. Ensemble selon la revendication 1 ou 2 **caractérisé en ce qu'**au moins une des chaînes d'émission comporte un amplificateur de puissance pouvant émettre sur une pluralité de fréquences porteuses et dont on peut choisir les fréquences actives par programmation.

4. Ensemble selon l'une des revendication 1 à 3 **caractérisé en ce qu'**il comporte des moyens pour, en cours de communication ou en période de veille pour chacun des terminaux dans la zone couverte par la station, modifier la fréquence d'émission d'une première fréquence avec diversité spatiale vers une seconde fréquence sans diversité spatiale, ou à diversité spatiale de degré moins élevé que pour la première fréquence et réciproquement.

5. Ensemble selon la revendication 4 **caractérisé en ce que** la commutation d'une première fréquence avec diversité spatiale vers une seconde fréquence' sans diversité spatiale ou à diversité moindre, ou réciproquement, s'effectue en fonction d'au moins l'un des paramètres suivants : la position estimée du terminal par rapport à la station de base, le débit de la communication de la station vers le terminal, le niveau ou la qualité de réception des signaux par le terminal, la puissance nécessaire pour joindre le terminal, la classe du terminal, et le type d'abonnement du terminal.

6. Ensemble selon la revendication 4 ou 5 **caractérisé en ce qu'**il comporte un dispositif (18) d'attribution des ressources radio agencé pour modifier la fréquence d'émission utilisée pour chaque communication vers un terminal.

7. Ensemble selon l'une des revendications 1 à 6, **caractérisé en ce qu'**il comprend deux groupes de chaînes d'émission et **en ce que** chaque groupe comporte au moins une fréquence utilisée à diversité spatiale pour uniquement ce groupe et au moins une autre fréquence utilisée à diversité spatiale pour les deux groupes.

8. Application d'un ensemble selon l'une des revendications précédentes à un système de télécommunication selon la norme UMTS ou CDMA 2000 ou DOCOMO.

9. Application d'un ensemble selon la revendication 4 à un système de télécommunication disposant d'une fonction de réaffectation de fréquence en cours de communication et/ou en mode de veille des terminaux.

## Claims

1. A unit for sending from a base station (10) to terminals in a telecommunications system, said unit comprising at least two sending channels or groups of sending channels (12, 14) adapted to send on a plurality of adjacent carrier frequencies, said channels being able to send in spatial diversity mode so that the same information may be sent by the channels or groups of channels on the same carrier frequency or frequencies, which unit is **characterized in that** the channels or groups of channels use at least one common carrier frequency (F₂, F₃) for sending in spatial diversity mode and at least one of the channels or groups of channels comprises at least one different frequency (F₁, F₄) for sending without spatial diversity or with a lower degree of spatial diversity.

2. A unit according to claim 1, **characterized in that** each of the channels or groups of channels uses at least one carrier frequency for sending without spatial diversity or with a lower degree of spatial diversity.

3. A unit according to claim 1 or claim 2, **characterized in that** at least one of the sending channels comprises a power amplifier able to send on a plurality of carrier frequencies and the active frequencies of which may be selected by programming them.

4. A unit according to any one of claims 1 to 3, **characterized in that** it comprises means for modifying the sending frequency during a call or during a standby period and for each of the terminals in the area covered by the station, from a first frequency with spatial diversity to a second frequency without spatial diversity or with a lower degree of spatial diversity than for the first frequency, and vice-versa.

5. A unit according to claim 4, **characterized in that** changing from a first frequency with spatial diversity to a second frequency without spatial diversity or with a lower degree of spatial diversity, or vice versa, is effected as a function of at least one of the following parameters: the estimated position of the terminal relative to the base station, the bit rate of the call from the base station to the terminal, the level or quality of reception of signals by the terminal, the power necessary for calling the terminal, and the class and type of subscription of the terminal.

6. A unit according to claim 4 or claim 5, **characterized in that** it comprises a device (18) for assigning radio resources adapted to modify the sending frequency used for each call to a terminal.

7. A unit according to any one of claims 1 to 6, **characterized in that** it comprises two groups of channels and each group comprises at least one frequency used with spatial diversity only for that group and at least one other frequency used with spatial diversity for both groups.

8. Application of a channel according to any preceding claim to a telecommunications system conforming to the UMTS, CDMA 2000, or DOCOMO standard.

9. Application of a channel according to claim 4 to a telecommunications system able to reassign frequencies during a call and/or in a standby mode of the terminals.

## Patentansprüche

1. Komplex zum Senden von einer Basisstation (10) an Endgeräte in einem Telekommunikationssystem, wobei dieser Komplex mindestens zwei Kanäle oder Sendekanalgruppen (12, 14) enthält, die auf mehreren benachbarten Trägerfrequenzen senden können, wobei diese Kanäle mit Raumdiversität senden können, so dass das Senden ein und derselben Information über die Sendekanäle oder Sendekanalgruppen auf der (den) gleichen Trägerfrequenz(en) erfolgen kann, **dadurch gekennzeichnet, dass** die Sendekanäle oder Sendekanalgruppen mindestens eine gemeinsame Trägerfrequenz (F₂, F₃) enthalten, die für das Senden mit Raumdiversität bestimmt ist, und mindestens einer dieser Kanäle oder eine der Gruppen mindestens eine Frequenz (F₁, F₄) mit einem anderen Wert enthält für das Senden ohne Raumdiversität oder mit einer Raumdiversität geringeren Grades.

2. Komplex gemäß Anspruch 1, **dadurch gekennzeichnet, dass** jeder der Sendekanäle oder jede der Sendekanalgruppen mindestens eine Trägerfrequenz enthält für das Senden ohne Raumdiversität oder mit einer Raumdiversität geringeren Grades.

3. Komplex gemäß Anspruch 1 oder 2, **dadurch gekennzeichnet, dass** mindestens einer der Sendekanäle einen Leistungsverstärker enthält, der auf einer Vielzahl von Trägerfrequenzen senden kann und bei dem man die aktiven Frequenzen durch Programmierung wählen kann.

4. Komplex gemäß einem der Ansprüche 1 bis 3, **dadurch gekennzeichnet, dass** er Mittel enthält, um im Verbindungsverlauf oder im Stand-by-Zeitraum für jedes der Endgeräte in dem von der Station abgedeckten Bereich die Sendefrequenz abzuändern von einer ersten Frequenz mit Raumdiversität hin zu einer zweiten Frequenz ohne Raumdiversität oder mit Raumdiversität geringeren Grades als für die erste Frequenz und umgekehrt.

5. Komplex gemäß Anspruch 4, **dadurch gekennzeichnet, dass** das Umschalten von einer ersten Frequenz mit Raumdiversität auf eine zweite Frequenz ohne Raumdiversität oder mit einer geringeren Diversität oder umgekehrt in Abhängigkeit von mindestens einem der folgenden Parameter erfolgt: die geschätzte Position des Endgeräts bezogen auf die Basisstation, die Übertragungsgeschwindigkeit der Verbindung von der Station zum Endgerät, der Empfangspegel oder die Empfangsqualität der Signale beim Endgerät, die erforderliche Leistung zur Verbindungsherstellung mit dem Endgerät, die Klasse des Endgeräts, und die Anschlussart des Endgeräts.

6. Komplex gemäß Anspruch 4 oder 5, **dadurch gekennzeichnet, dass** er eine Vorrichtung (18) zur Zuteilung der Funkmittel enthält, die so aufgebaut ist, dass sie die Sendefrequenz, die für jede Verbindung zu einem Endgerät verwendet wird, abändert.

7. Komplex gemäß einem der Ansprüche 1 bis 6, **dadurch gekennzeichnet, dass** er zwei Gruppen von Sendekanälen enthält, und **dadurch gekennzeichnet, dass** jede Gruppe mindestens eine Frequenz beinhaltet, die mit Raumdiversität nur für diese Gruppe verwendet wird und mindestens eine weitere Frequenz, die mit Raumdiversität für die beiden Gruppen verwendet wird.

8. Anwendung eines Komplexes gemäß einem der vorstehenden Ansprüche auf ein Telekommunikationssystem gemäß der Norm UMTS oder CDMA 2000 oder DOCOMO.

9. Anwendung eines Komplexes gemäß Anspruch 4 auf ein Telekommunikationssystem, das über eine Funktion zur Frequenzneuzuteilung im Verbindungsverlauf und/oder im Stand-by-Modus der Endgeräte verfügt.
